## Europäisches Patentamt
## European Patent Office
## Office européen des brevets

(19)

(11) Numéro de publication: **0 136 933**
**A1**

(12) **DEMANDE DE BREVET EUROPEEN**

(21) Numéro de dépôt: **84401703.8**

(22) Date de dépôt: **22.08.84**

(51) Int. Cl.⁴: **H 04 M 3/28**

(30) Priorité: **02.09.83 FR 8314064**

(43) Date de publication de la demande:
**10.04.85 Bulletin 85/15**

(84) Etats contractants désignés:
**AT BE CH DE GB IT LI LU NL SE**

(71) Demandeur: **SPIE-BATIGNOLLES**
**Tour Anjou 33, Quai de Dion-Bouton**
**F-92806 Puteaux(FR)**

(72) Inventeur: **Betton, Claude**
**Rue du Peintre Sisley**
**f-77250 Veneux Les Sablons(FR)**

(74) Mandataire: **Bouju, André**
**38 Avenue de la Grande Armée**
**F-75017 Paris(FR)**

(54) **Appareil pour contrôler automatiquement la correspondance entre le numérique des abonnés au téléphone et les différents repérages transport et distribution de la paire qui leur est attribuée.**

(57) L'appareil est destiné à être branché au réseau électrique et aux têtes de raccordement des lignes de transport et de distribution d'un sous-répartiteur.

Cet appareil comprend des moyens (4, 5) permettant d'introduire successivement dans l'appareil les numériques et les numéros de constitution des abonnés du fichier technique qui est à vérifier, des connecteurs (8, 9, 10) destinés à être raccordés aux têtes d'un sous-répartiteur, une unité de contrôle comprenant un microprocesseur (23) programmé pour stocker les données introduites dans l'appareil et pour commander l'émission d'un signal codé vers les câbles de transport et distribution des paires à tester, des moyens pour tester ce signal pour vérifier si la continuité désignée est correcte ou non sur les paires correspondantes des têtes de transport et distribution du sous-répartiteur et des moyens (3) pour visualiser les résultats de ce test.

Utilisation dans les sous-répartiteurs des installations téléphoniques.

./...

FIG_1

**0136933**

**"Appareil pour contrôler automatiquement la correspondance entre le numérique des abonnés au téléphone et les différents repérages transport et distribution de la paire qui leur est attribuée"**

La présente invention concerne un appareil pour contrôler automatiquement la correspondance entre le numérique des abonnés au téléphone et les différents repérages transport et distribution de la paire qui leur est attribuée.

On sait qu'une ligne d'abonnés est constituée par deux fils métalliques constituant une paire téléphonique. Cette paire est continue depuis le répartiteur général situé dans le central téléphonique jusque chez l'abonné. Cette paire transite par les deux câbles suivants :

- un câble transport s'étendant entre le répartiteur général et le sous-répartiteur et

- un câble distribution s'étendant entre le sous-répartiteur et le poste téléphonique de l'abonné.

Toutes les paires de ces câbles ont un repérage : un en transport et l'autre en distribution. Chacun de ces deux repérages est appelé constitution. Par conséquent, il y a deux constitutions par numérique d'abonné .

Par exemple, à un numéro d'abonné tel que 739 33 20 correspond un repérage transport tel que 152.10.6 et un repérage distribution tel que 2.12.4.

L'ensemble de tous ces repérages est regroupé dans un fichier appelé en France, le fichier technique des abonnés (FTA).

On comprend que ce fichier doit refléter d'une manière absolument fidèle, l'état du répartiteur général et des sous-répartiteurs qui en dépendent.

Par conséquent, la mise à jour de ce fichier est nécessaire après chaque intervention sur le réseau téléphonique. On constate, surtout lors du raccordement de nouveaux abonnés, que si le suivi du repérage des nouvelles paires n'a pas été effectué, une lente mais inéxorable désorganisation du fichier technique des abonnés s'installe.

Selon des sources de l'administration des PetT, les pourcentages d'erreur de ces fichiers peuvent atteindre jusqu'à 35%.

Cette situation conduit l'administration des PetT à effectuer périodiquement une refonte totale de son fichier.

Cette opération consiste à suivre manuellement les fils volants (appelés jarretières) qui relient d'une part, dans les sous-répartiteurs, les différentes têtes de câbles transport aux différentes têtes de câbles distribution et d'autre part, dans le répartiteur général, les différentes têtes de câbles transport aux différents numériques de l'abonné.

Cette opération qui est actuellement exécutée de façon entièrement manuelle est longue et fastidieuse et est considérée par les opérateurs comme une punition. De plus, cette opération manuelle n'est pas totalement dépourvue d'erreurs.

Le but de la présente invention est de remédier aux inconvénients précités en créant un appareil pour contrôler automatiquement la correspondance entre le numérique des abonnés au téléphone et les différents repérages transport et distribution de la paire qui leur est attribuée et permettant ainsi d'effectuer une mise à jour automatique, périodique et sans erreur des fichiers techniques des abonnés.

L'appareil visé par l'invention est destiné à être branché à une source d'alimentation électrique et aux têtes de raccordement des lignes de transport et de distribution d'un sous-répartiteur.

Suivant l'invention, cet appareil est caractérisé en ce qu'il comprend :

- des moyens permettant d'introduire successivement dans l'appareil les numériques et les numéros de constitution des abonnés du fichier technique qui est à vérifier,

3

- des connecteurs destinés à être raccordés aux têtes d'un sous-répartiteur,

- une unité de contrôle comprenant un microprocesseur programmé pour stocker les données introduites dans l'appareil et pour commander l'émission d'un signal codé vers les câbles transport et distribution des paires à tester, des moyens pour détecter ce signal, pour vérifier si la constitution désignée est correcte ou non sur les paires correspondantes des têtes de transport et distribution du sous-répartiteur, et

- des moyens pour visualiser les résultats de ce test.

Pour utiliser l'appareil conforme à l'invention, il suffit de raccorder les connecteurs de l'appareil aux têtes du sous-répartiteur et d'introduire dans l'appareil successivement les numériques et les numéros de constitution des abonnés du fichier technique qui est à vérifier.

L'unité de contrôle met en mémoire les données introduites dans l'appareil et commande automatiquement l'émission de signaux codés vers la paire à tester et détecte ce signal pour vérifier si la constitution désignée est correcte ou non. Les résultats de ce test sont directement visualisés de préférence sur une imprimante qui imprime automatiquement ces résultats sur le fichier technique des abonnés.

Dans une réalisation préférée de l'appareil, le moyen d'introduction des données relatives aux numériques et à la constitution des abonnés, comprend un clavier à touches, lesdites touches comprenant des touches numérotées pour introduire les numériques et les numéros de constitution de l'abonné et des touches pour sélectionner les programmes suivants :

- un programme d'introduction des numériques et des numéros de constitution de l'abonné,

- un programme de spécification de la correspondance des têtes du sous-répartiteur,

- un programme de tests de continuité,

- un programme d'affectation d'une tête en transport ou en distribution, et

- un programme pour revenir en position de début de cycle.

Selon une version avantageuse de l'invention, l'appareil comprend un boîtier pour décoder les données introduites dans l'appareil par les touches du clavier et les stocker dans une mémoire tampon et le microprocesseur est programmé pour lire cette mémoire tampon et stocker les données dans une mémoire de travail. Pour vérifier la correspondance entre les numériques et les numéros de constitution et les paires à tester, l'appareil comprend des moyens pour contrôler la présence d'une tension entre les paires de distribution et de transport programmées au moyen des touches du clavier.

L'appareil conforme à l'invention comprend également de préférence des moyens pour tester sur la ligne de service côté demandeur, l'existence d'une fréquence correspondant à la tonalité, pendant une durée déterminée, des moyens pour contrôler la détection d'une fréquence nulle sur les paires transport et distribution du côté demandé, des moyens pour stocker en mémoire les numériques de l'abonné et pour détecter sur la ligne de service côté demandeur l'existence d'une fréquence déterminée et pour commander l'impression sur l'imprimante du résultat de ce test si la durée du signal correspondant à la fréquence précitée dépasse une valeur prédéterminée, indiquant que le réseau est saturé, et des moyens pour détecter si l'abonné de la paire à tester est occupé.

L'unité de contrôle de l'appareil selon l'invention, comporte de préférence, en outre, une carte clavier équipée d'une mémoire vive, de deux K octets pour stocker les informations concernant les résultats des tests et un circuit pour traiter les informations issues des moyens d'introduction de données en vue de les convertir en valeurs ASCII et réaliser l'interface avec le bus de données du système ainsi qu'une carte de commande, une carte de filtrage, une carte de liaison avec le sous-répartiteur et des cartes de sélection reliées chacune aux connecteurs destinés à être raccordés aux têtes du sous-répartiteur, la carte de commande comportant des moyens pour adresser les cartes de sélection pour élaborer les signaux utilisés par les cartes de filtrage et de liaison avec le sous-répartiteur et pour prendre en compte les informations issues de la carte de filtrage.

Selon une version préférée de l'invention, la carte de commande comprend deux périphériques parallèles permettant d'interfacer le bus du système avec les cartes recevant les signaux extérieurs, l'un de ces périphériques étant relié à la carte de filtrage et l'autre à une carte mère sélection qui sert de support aux cartes de sélection.

La carte de liaison avec le sous-répartiteur comprend un relais assurant la prise de la ligne et sa numérotation, un relais assurant l'aiguillage d'un détecteur de fréquence sur la paire de transport ou de distribution et des relais permettant de simuler le décrochage du téléphone en transport ou en distribution.

D'autres particularités et avantages de l'invention apparaîtront encore dans la description ci-après.

Aux dessins annexés donnés à titre d'exemples non limitatifs :

- la figure 1 est une vue en perspective schématique de l'ensemble de l'appareil conforme à l'invention,

- la figure 2 est un schéma, montrant les principaux composants et les liaisons entre ceux-ci, de l'unité de contrôle de l'appareil conforme à l'invention,

- la figure 3 est une vue schématique montrant les interconnexions entre les cartes de l'unité de contrôle,

- la figure 4 est un schéma représentant les principaux composants des différentes cartes de l'unité de contrôle,

- les figures 5 et 6 sont deux vues complémentaires représentant le schéma détaillé des divers circuits électroniques de l'unité de contrôle de l'appareil conforme à l'invention,

- la figure 7 est un diagramme général illustrant l'utilisation de l'appareil conforme à l'invention.

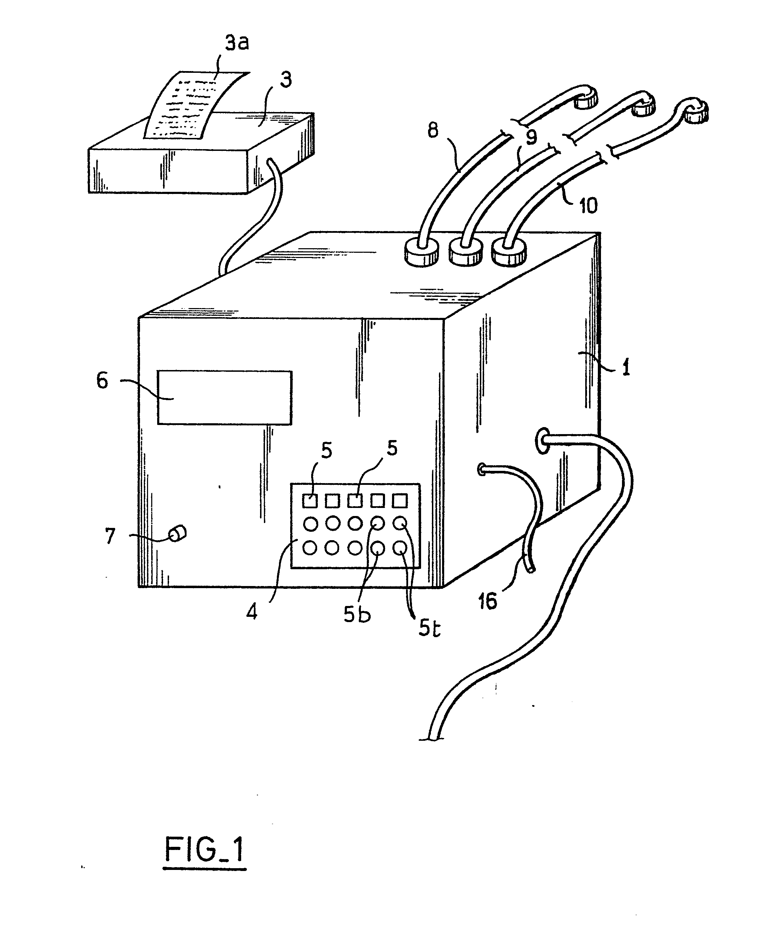

L'appareil représenté sur la figure 1 a pour but de contrôler la correspondance entre le numérique de l'abonné et les différents repérages en câbles de réseau des deux fils appelés paires qui lui sont attribués.

Cet appareil comporte un boîtier 1 renfermant une unité de contrôle qui sera détaillée plus loin, reliée à une imprimante 3 et une source d'alimentation électrique transformant l'alimentation en 220 volts du réseau en tensions continues respectivement de + 5 volts et + 15 volts.

La face avant du boîtier 1 comprend un clavier 4 à touches 5 et 5b, une barrette alphanumérique 6 pour visualiser les données entrées dans l'appareil au moyen des touches 5 de programme et 5b numériques du clavier 4 et un bouton 7 de mise en route ou d'arrêt de l'appareil.

L'unité de contrôle contenue dans le boîtier 1 est reliée par trois câbles de connexion 8, 9, 10 aux têtes de raccordement des lignes de transport et de distribution d'un sous-répartiteur.

Cette unité de contrôle est également reliée au sous-répartiteur par une ligne de service 16.

On va d'abord détailler l'unité de contrôle contenue dans le boîtier 1. Cette unité de contrôle comprend essentiellement un microprocesseur programmé pour stocker les données introduites dans l'appareil au moyen des touches du clavier 4 et pour commander l'émission d'un signal codé vers les câbles transport et distribution de la paire à tester et des moyens pour détecter ce signal pour vérifier si la constitution désignée est correcte ou non sur les paires correspondantes des têtes de transport et distribution du sous-répartiteur.

Les résultats de ce test sont directement imprimés par l'imprimante 3, sur le fichier technique des abonnés 3a.

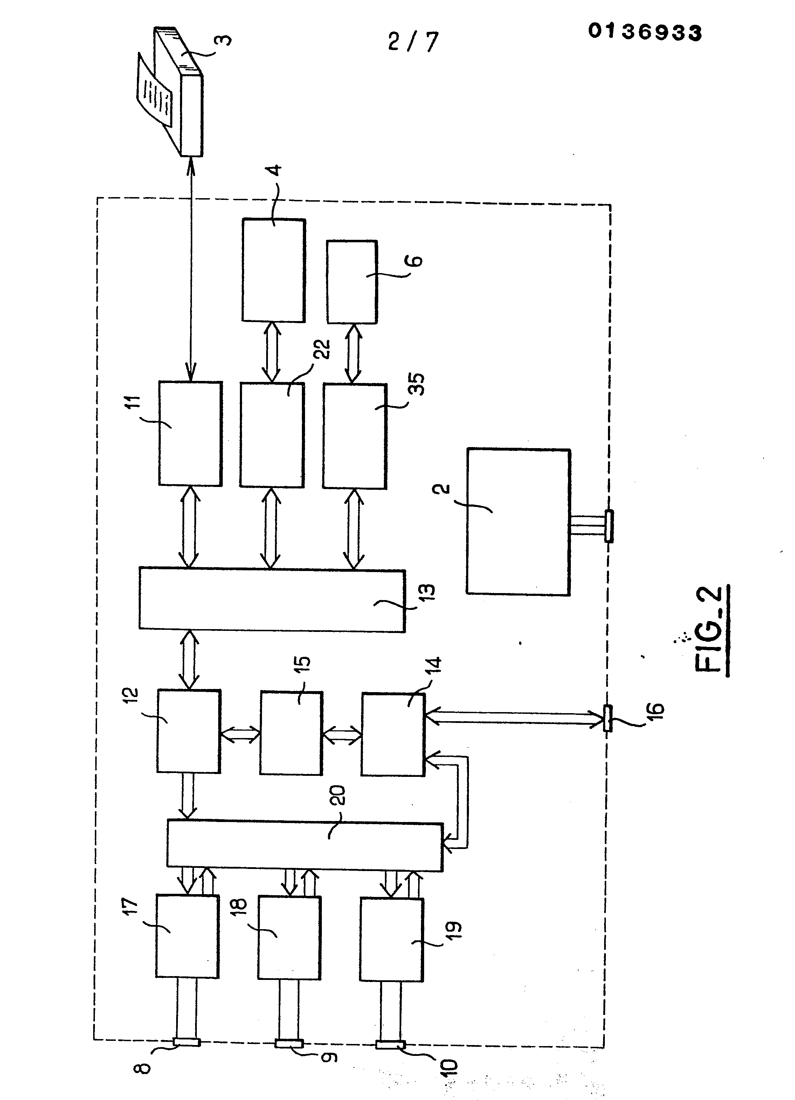

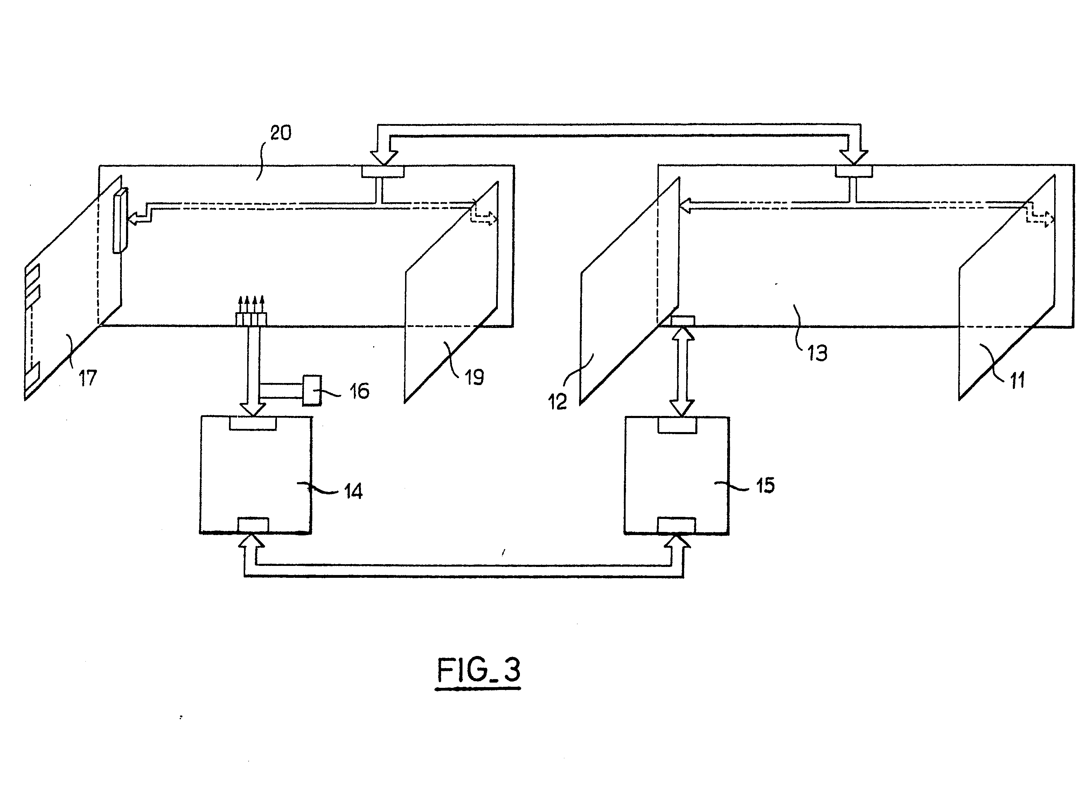

L'unité de contrôle comprend (voir figures 2 et 3) :

- une unité centrale 11 reliée à l'imprimante 3 et à une carte de commande 12 par l'intermédiaire d'une carte de support 13,

- une carte 14 de liaison qui est reliée à la carte commande 12 au moyen d'une carte de filtrage 15 ; cette carte 14 est reliée au sous-répartiteur par la ligne de service 16,

- trois cartes de sélection 17, 18, 19 qui sont reliées aux trois câbles de connexion 8, 9, 10 raccordés aux têtes du sous-répartiteur ; ces cartes de sélection 17, 18, 19 sont elles-mêmes reliées à la carte de commande 12 et à la carte de liaison 14 au moyen d'une carte de support 20.

L'unité de contrôle comporte d'autre part, une carte clavier 22 qui est reliée d'une part au clavier 4 et d'autre part à la carte de support 13. A ce support 13 est également connectée la barrette alphanumérique 6.

La figure 3 montre en détail les interconnexions entre la carte unité centrale 11, la carte de support 13, la carte de commande 12, la carte de filtrage 15, la carte de support 20, les cartes de sélection 17, ... 19 et la carte 14 de liaison avec le sous-répartiteur.

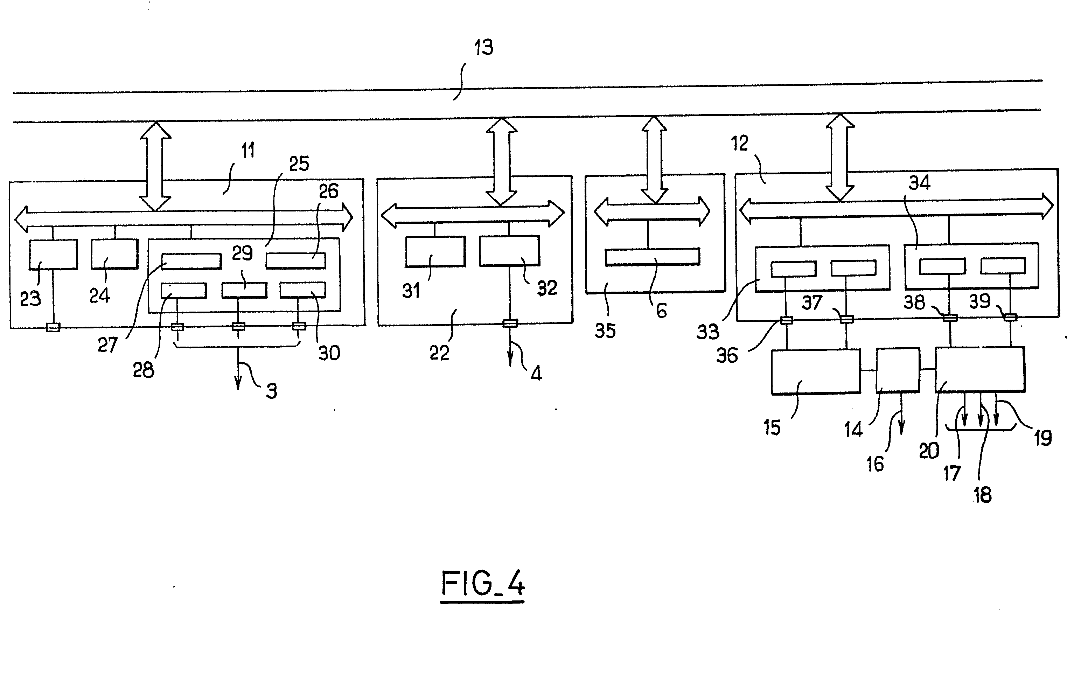

La carte unité centrale 11 (voir figure 4) comprend un microprocesseur 23 chargé de gérer l'ensemble de l'unité de contrôle en fonction des programmes sélectionnés par le clavier 4, une mémoire EPROM 24 de 2 K octets contenant le programme d'application, un circuit d'interface 25 comprenant 256 octets de mémoire vive 26 pour le stockage temporaire des informations, un timer 27 pour mesurer la durée des signaux et trois ports parallèles 28,29, 30 réalisant l'interface avec l'imprimante 3.

La carte clavier 22 reliée au clavier 4 est équipée d'une mémoire vive 31 de 2 K octets et comprenant des moyens pour stocker les informations concernant les résultats des tests et un circuit 32 pour traiter les informations issues du clavier 4 d'introduction de données en vue de les convertir en valeurs ASCII et réaliser l'interfaçage avec le bus de données du système.

La carte de commande 12 comprend des moyens pour adresser les cartes de sélection 17, 18, 19 pour élaborer les signaux utilisés par les cartes de filtrage 15 et de liaison 14 avec le sous-répartiteur et pour prendre en compte les informations issues de la carte de filtrage 15.

Cette carte de commande 12 comprend à cet effet deux périphériques parallèles 33, 34, permettant d'interfacer le bus de données du système avec les cartes (15, 14, 17, 18, 19) recevant les signaux extérieurs. L'un 33 de ces périphériques est relié à la carte de filtrage 15 et l'autre 34 est relié à une carte mère sélection 20 qui sert de support aux cartes de sélection 17, 18, 19.

La liaison entre le périphérique 33 et la carte de filtrage 15 est réalisée par deux ports 36, 37. La liaison entre le périphérique 34 et la carte 20 est réalisée par deux ports 38, 39.

La carte de support 13 sert de support à la carte unité centrale 11, à la carte de commande 12 et à la carte clavier 22, ainsi qu'à une carte d'affichage 35 qui comporte la barrette alphanumérique 6.

Cette carte 35 est chargée de gérer l'affichage de la barrette alphanumérique 6 et est directement connectée sur le bus de données du système. Elle comprend par ailleurs toute la logique de traitement et de décodage des signaux. Le microprocesseur 23 dépose sur le bus de données la valeur ASCII du caractère à afficher, l'électronique de la carte 35 fait le reste.

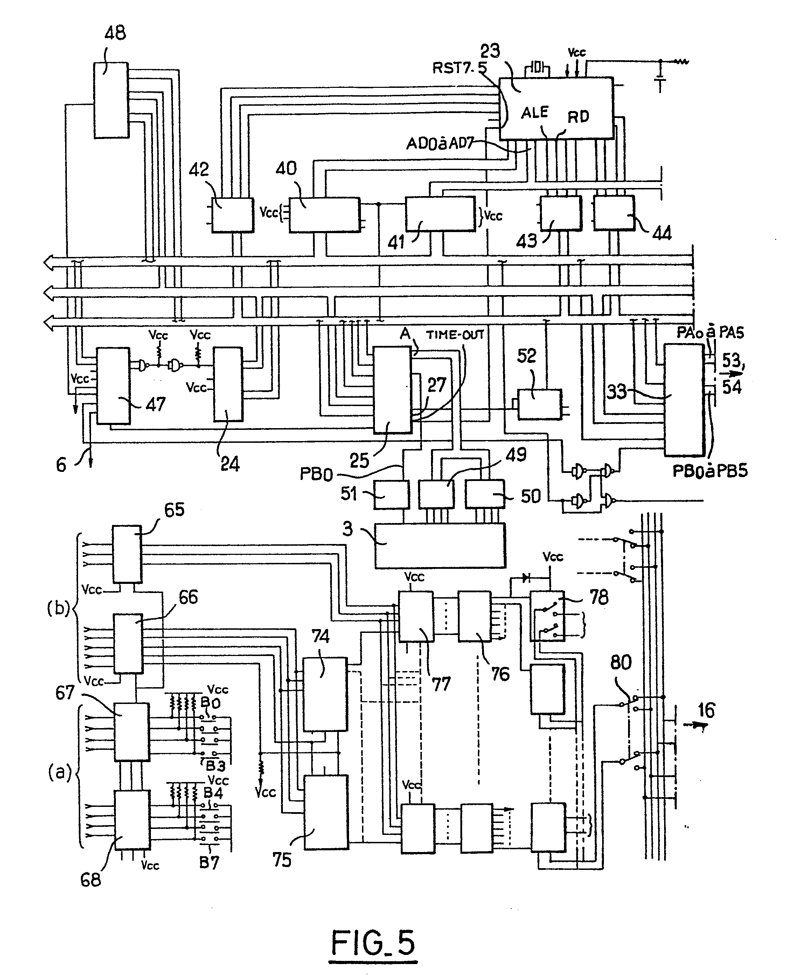

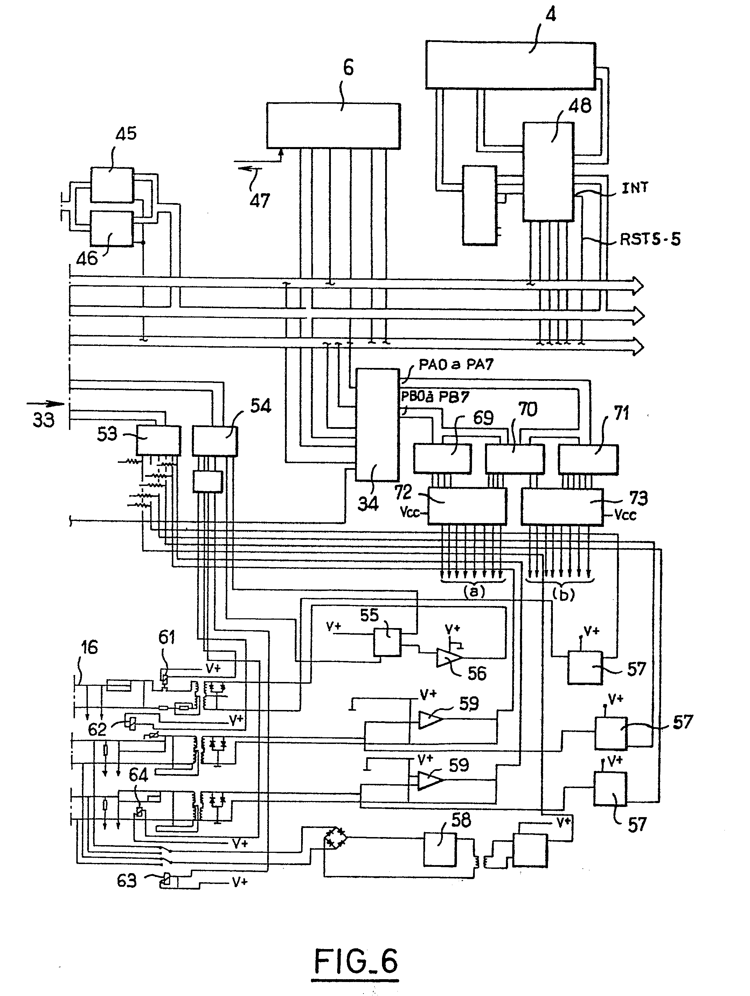

La carte de filtrage 15 comprend un générateur de fréquence 55 (voir figures 5 et 6) et des détecteurs de fréquence 57.

La carte de liaison 14 avec le sous-répartiteur comprend un relais 61 assurant la prise de la ligne et sa numérotation, un relais 63 assurant l'aiguillage du détecteur 57 sur la paire de transport ou de distribution et des relais 62, 64 permettant de simuler le décrochage d'un combiné téléphonique en transport ou en distribution.

Le schéma électronique détaillé de l'unité de contrôle est représenté à titre d'exemple sur les figures 5 et 6 qui sont complémentaires.

Composition du système central :

Le microprocesseur 23 du type 8085 A de chez INTEL est piloté par un quartz de 6 MHz et est chargé de gérer l'ensemble des opérations.

Les huit lignes AD0 à AD7 de ce microprocesseur 23 sont démultiplexées pour former d'une part le bus d'adresses, comportant 16 lignes (les huit lignes supplémentaires étant A8 à A15), géré par les boîtiers tampons unidirectionnels 40, 41, du type 8212 (sélectionnés par la ligne de contrôle ALE du microprocesseur) et d'autre part le bus de données à travers les boîtiers tampons bidirectionnels 45, 46 du type 8216 (orientés par la ligne RD du microprocesseur). Les boîtiers tampons 42, 43, 44 sont utilisés pour le bus de contrôle.

Un décodeur 47 constitué par un boîtier du type 8205 élabore les informations de sélection des différents boîtiers ci-dessus.

La mémoire de programme 24 est constituée par un circuit de mémoire EPROM du type 2764 de chez INTEL, d'une capacité de 8 K octets.

La mémoire de données 48 est constituée par un boîtier de mémoire statique du type 2128 de chez INTEL, d'une capacité de 2 K octets.

Description des périphériques :

La barrette d'affichage 6 de 32 caractères alphanumérique du type DE 432 de chez DECO est connectée directement sur les bus du système.

Le clavier numérique 4 à seize touches est interfacé avec un boîtier 48 du type 8279 de chez INTEL, chargé de décoder la matrice du clavier 4. La sortie INT pilote l'entrée d'interruption RST 5-5 du microprocesseur 23, cette sortie n'étant valide que lors des séquences d'entrée de données au clavier 4.

L'imprimante 3 à 80 colonnes du type TKL 8510 A de chez TEKELEK est commandée à travers des circuits 49, 50 du type 74 LS08, par le circuit 25 du type 8155 de chez INTEL.

Le port A du circuit 25 et la ligne PBo reliée à un circuit 51 sont utilisés pour le transfert des données et des signaux de contrôle.

Le circuit 25 du type 8155 comprend également un timer 27 utilisant l'horloge du microprocesseur 23 qui est divisée par deux grâce au boîtier 52 du type 74 LS93 A de chez TEXAS INSTRUMENT.

La sortie TIME-OUT du timer 27 pilote l'entrée d'interruption RST 7-5 du microprocesseur 23 du type 8085 A.

Le timer 27 est également utilisé en comptage pour les temporisations liées aux différents signaux.

Traitement des circuits extérieurs :

Le boîtier 33 du type 8255 A permet l'interfaçage, à travers des "trigger de Schmitt" constitués par les boîtiers 53, 54 du type 74 LS 14 avec la partie de traitement des signaux.

Les lignes PAo et PA1 du boîtier 33 sont reliées à un générateur de fréquence 55 constitué par un circuit du type XR 2206.

La ligne PA1 commande l'alimentation du boîtier générateur de fréquence 55 par l'intermédiaire de deux transistors fonctionnant en commutation.

La ligne PAo commande la commutation des fréquences étalonnées par des résistances connectées aux bornes 7 et 8 du générateur de fréquence 55.

Ce générateur 55 délivre un signal à l'amplificateur 56 du type TDA 2002 qui restitue en sortie d'un transformateur des fréquences de 2025 et 2225 Hz permettant de coder le signal test envoyé sur la ligne de service 16.

La ligne PB4 du boîtier 33 reçoit l'information concernant la présence de tonalité sur la ligne de service 16.

Cette détection est réalisée par des circuits 57 du type XR 2211 étalonnés pour décoder une fréquence de 440 Hz en continu.

Les lignes PB2 et PB3 du boîtier 33 reçoivent les informations issues des décodeurs 57 constitués par des circuits XR 2211 chargés de détecter les fréquences du signal test sur les paires transport et distribution à vérifier.

La ligne PB5 du boîtier 33 reçoit l'information de détection de tensions sur les paires transport et distribution.

Cette détection est réalisée par le circuit 57 du type XR 2211 réagissant aux signaux générés par un multi-vibrateur 58 du type ICM 7555 fonctionnant à partir d'une tension d'environ 3 volts.

Les lignes PBo et PB1 du boîtier 33 reçoivent les informations issues des filtres passe-bas 59, constitués d'un composant actif du type MC 1741 et de composants passifs, chargés de détecter toute présence de fréquence sur les paires testées.

Les lignes PA2 à PA5 du boîtier 33 permettent la réalisation des différentes phases de détection par l'intermédiaire de relais 61 à 64.

Le relais 61 permet la prise de ligne et la numérotation.

Le relais 63 permet l'aiguillage du dispositif de détection de tensions sur la paire transport ou distribution.

Les relais 62 et 64 permettent de simuler le décrochage en transport ou distribution.

Dispositif de sélection des paires :

Le deuxième boîtier 34 du type 8255 A permet de sélectionner la paire à tester par l'intermédiaire des lignes PAo à PA7 et PBo à PB7.

Le numéro de la paire et de l'amorce (b) est envoyé sur les circuits "bascules" 65, 66 du type 74 LS 174 et le numéro de la tête (a) sur les comparateurs 67, 68 du type 74 LS 85 à travers les "trigger de Schmitt" 69, 70, 71 du type 74 LS 14 et des boîtiers tampons de sortie 72, 73 du type 74 S 241.

Les comparateurs 67, 68 du type 74 LS 85 valident le numéro de la tête par rapport au codage réalisé par les contacts Bo à B7 et activent les sorties des "bascules" 65, 66 du type 74 LS 174 qui délivrent leurs informations aux décodeurs de numéros d'amorce 74, 75 du type 74 LS 138 et au circuit 76 du type XR 2203 à travers les décodeurs de numéros de paires 77 du type 74 LS 259.

Les boîtiers tampons inverseurs 76 du type XR 2203 délivrent la polarité négative permettant l'excitation du relais 78, ... correspondant à la paire testée, qui se trouve reliée au dispositif de traitement des signaux en transport ou distribution suivant la disposition de l'inverseur 80.

La programmation de l'appareil conforme à l'invention s'effectue à l'aide des touches 5 et 5b du clavier 4.

Les touches 5 comprennent successivement :

- des touches V-0 qui permettent d'introduire les numériques et les numéros de constitution,

- des touches V-1 qui servent à spécifier la correspondance tête,

- des touches V-2 qui servent aux tests de continuité (la définition des bornes),

- des touches V-3 qui servent à l'affectation transport et distribution,

- une touche RET qui permet de revenir en position début de cycle,

- une touche T/D pour affecter une tête en transport ou en distribution,

- une touche *, et des touches pour introduire les chiffres correspondant aux numériques et aux numéros de constitution de l'abonné.

Le lancement ds programmes s'effectue à l'aide des touches 5 t du clavier 4:

- une touche TC qui permet de débuter l'exécution du test de continuité,

- une touche DC qui permet de débuter l'exécution du cycle de vérification des bonnes constitutions.

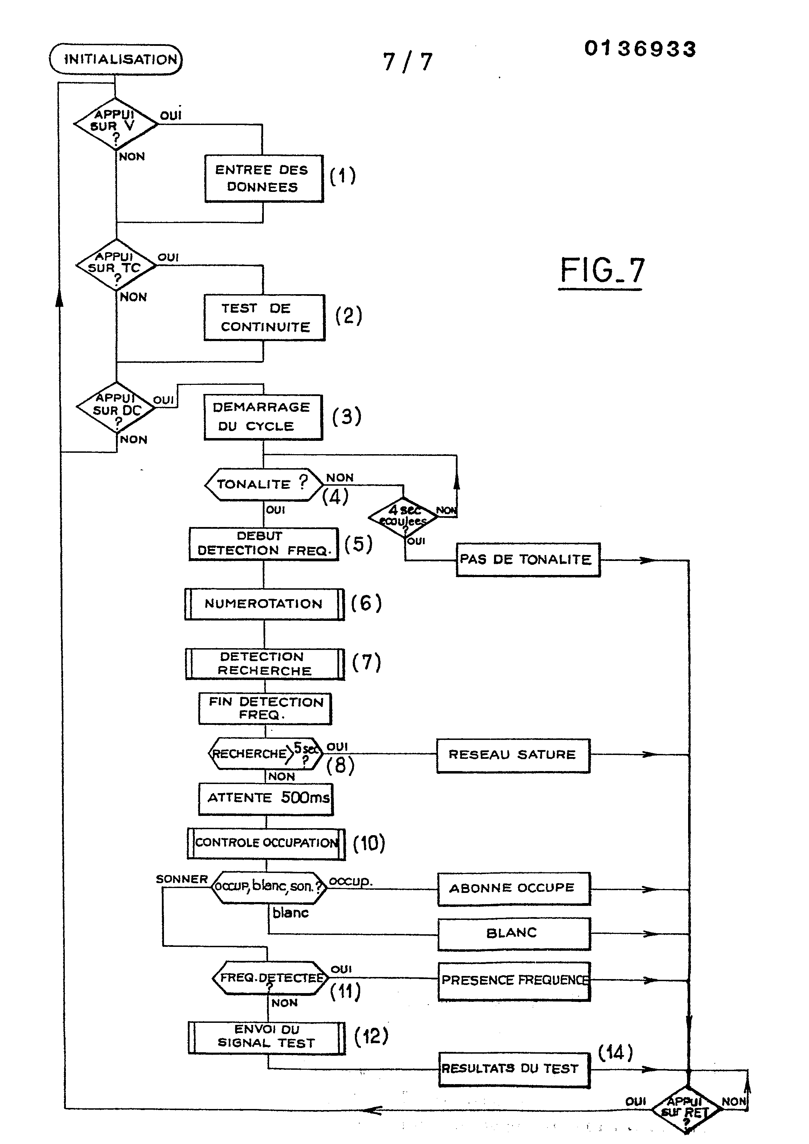

Pour utiliser l'appareil conforme à l'invention, on procède comme exposé ci-après (voir figure 7) :

1/ L'opérateur entre dans l'appareil au moyen des touches 5 et 5b du clavier 4, les éléments permettant de faire la correspondance entre les têtes de distribution et de transport réelles et celles de l'appareil. Le boîtier 32 relié au clavier 4 réalise à cet effet la fonction d'entrée de données à partir du clavier 4. Lorsqu'une touche du clavier 4 est enfoncée, le boîtier 32 la décode et la stocke dans la mémoire tampon 31. Le microprocesseur 23 fait ensuite une lecture de cette mémoire tampon 31 et va la stocker dans la mémoire de travail 26. Il en est de même pour les autres données qui sont entrées au clavier 4 jusqu'à ce que le microprocesseur 23 reconnaisse la valeur correspondant à la touche RET qui indique que le programme V-1 est terminé.

2/ L'appareil effectue ensuite un contrôle de présence d'une tension (continue ou alternative) sur les paires comprises entre les bornes programmées par l'opérateur. Dans le cas où aucune tension n'est détectée, la ou les constitutions défaillantes sont imprimées par l'imprimante 3 en tête de liste.

Ce test débute par l'entrée de la même façon que pour le programme V-1 des numéros des paires que l'on va tester. Ceci constitue le programme V-2. Ensuite l'opérateur enfonce la touche TC qui annonce le début du test de continuité proprement dit. Le microprocesseur 23 adresse alors le circuit 34 situé sur la carte de commande 12 et lui communique le numéro de la paire que l'on va tester. Cette valeur se retrouve sur les ports de sortie 38,39 du circuit 34, ceux-ci étant eux-mêmes reliés aux connecteurs de la carte mère sélection 20 qui est en liaison avec les cartes de sélection 17, 18, 19. Le numéro de la paire se retrouve donc sur les circuits de ces cartes de sélection 17, 18, 19. La carte sélection 17, 18 ou 19 qui reconnaît la paire, sélectionne donc un des relais 78, qui met en relation physiquement la paire avec la carte de liaison 14. La paire se retrouve donc connectée à la carte filtrage 15 par l'intermédiaire de cette carte de liaison 14. Par l'intermédiaire du relais 63, cette paire se retrouve en contact avec le dispositif de détection de tension sur la carte de filtrage 15. Si le circuit 58 de la carte de filtrage 15 détecte une tension, il restitue une information logique sur la sortie de cette carte qui est connectée à la carte de commande 12 au moyen de l'un des ports 36, 37 du circuit 33. A ce moment, le microprocesseur 23 effectue une lecture de ce circuit 33 et s'il trouve le niveau logique 1 sur la ligne du port correspondant, il en déduit que la tension est bonne. S'il trouve un niveau 0 il en déduit qu'il n'y a pas de tension sur la paire qu'il vient de tester. Ce résultat est stocké en mémoire et le microprocesseur 23 envoie le numéro de la paire suivante au circuit 34 et le test recommence jusqu'à ce qu'on ait atteint le dernier numéro des paires à tester.

3/ L'opérateur entre au clavier 4 le numéro de l'abonné. L'opérateur entre ensuite les numéros des constitutions transport et distribution devant théoriquement correspondre à ce numérique. Puis il appuie sur une touche DC début de cycle. A partir de ce moment le test se déroule automatiquement jusqu'à la dernière phase. La procédure de ce test est identique à celle du paragraphe 1/ ci-dessus en ce qui concerne les entrées des données au clavier. Les différents éléments et données qui sont entrés au clavier sont stockés dans la mémoire vive 26 constituée par les 256 octets de RAM situés sur la carte unité centrale 11.

4/ L'appareil teste d'abord sur la ligne de service 16 côté demandeur, s'il obtient avant 4 secondes la tonalité (signal de 440 Hz plus ou moins 1% permanent). Dans le cas contraire un T majuscule est imprimé dans l'une des colonnes et le numéro de constitution en distribution est imprimé dans une autre colonne du fichier technique des abonnés placé dans l'imprimante 3.

La barrette d'affichage 6 affiche "pas de tonalité" et l'opérateur passe au numéro suivant.

Pendant le déroulement de ce test et des suivants, le timer 27 génère une interruption toutes les millisecondes, vers le microprocesseur 23. Les fonctions de temporisation et contrôle de durée d'un signal sont réalisées en initialisant une mémoire à la valeur correspondant à la durée contrôlée, cette mémoire étant décrémentée toutes les millisecondes. Lors du test ici exposé, le microprocesseur 23 commence à charger la mémoire avec la valeur correspondant à une durée de 4 secondes. Il ferme ensuite le relais 61 situé sur la carte de liaison 14 par l'intermédiaire des ports du circuit 33 situé sur la carte de commande 12 et va vérifier sur un autre port connecté avec la carte filtrage 15 s'il obtient une information avant 4 secondes. La détection de la présence d'une tonalité représenté par un signal de 440 Hz se fait grâce au circuit 57 de la carte filtrage.

Les conclusions de ce test sont imprimées comme indiqué dans le paragraphe précédent.

5/ L'appareil débute ensuite un contrôle de détection de fréquence nulle côté demandé sur les paires transport et distribution. Le microprocesseur 23 sélectionne les deux paires transport et distribution correspondant au numérique de l'abonné à tester.

La sélection se fait de la même façon que pour le test de continuité. Les deux paires à tester se trouvent donc connectées par l'intermédiaire des relais 78 sur chaque carte sélection 17, 18, 19, l'une des cartes comprenant la paire transport et l'autre la paire distribution et par l'intermédiaire des connecteurs de la carte mère sélection 20 à la carte filtrage 15 en passant par la carte liaison 14. Les circuits 57 de la carte filtrage 15 se retrouvent donc en contact avec les deux paires à tester. Dès qu'une fréquence apparaît sur l'une des paires, les bornes de la carte filtrage 15 reliées aux ports du circuit 33 de la carte de commande 12 pasent au niveau logique 0, c'est-à-dire + 5 volts et lorsque le microprocesseur 23 vient lire les registres tampons du circuit périphérique 33, il constatera la valeur 1 en cas de détection de fréquence.

6/ Le système envoie le numéro de l'abonné sur la ligne de service 16 côté demandeur. Cette phase doit durer au moins 3,5 secondes. L'envoi du numérique de l'abonné se fait par la fermeture du relais 61 situé sur la carte de liaison 14. Celui-ci est commandé par l'intermédiaire d'une ligne passant par la carte de filtrage 15 et reliée à la ligne PA2 du périphérique 33. Le microprocesseur 23 envoie donc successivement la valeur logique 0 et la valeur logique 1 sur cette ligne de façon à alimenter ou couper l'alimentation du relais 61. La phase de numérotation dure au minimum 3,5 secondes, ce qui signifie que dans le cas où on aurait un numéro avec seulement des valeurs égales à 1, on ait un temps de fermeture-ouverture égal à 0,1 seconde, par numéro. L'addition des temps d'ouverture-fermeture pour chaque numéro et des temps d'intertrain permettent d'atteindre un temps de numérotation supérieur à 3,5 secondes. Ce temps est nécessaire pour pouvoir prendre en compte au niveau des détections de fréquence nulle un signal de sonnerie apparu sur la ligne demandée dans le cas où celui-ci serait en phase de blanc, ce blanc pouvant durer 3,5 secondes. La durée des ordres envoyés au relais 61 par le microprocesseur 23 se contrôle par la décrémentation d'une mémoire initialement chargée avec la durée d'ouverture ou fermeture du relais, et la base de temps délivrée par le timer 27 situé sur la carte 11, qui travaille en interruption.

7/ L'appareil détecte la présente du signal de recherche de 440 Hz du côté demandeur sur la ligne de service 16.

Cette détection se fait d'une part par la détection de présence ou absence d'une fréquence de 440 Hz de la même façon que se fait la détection de tonalité, puisqu'il s'agit de la même fréquence. De plus, le microprocesseur 23 contrôle la présence des informations sur un port du périphérique 33 pendant une durée égale à la période du signal ; cette durée étant définie par une mémoire de comptage initialisée à 0 et par la base de temps délivrée par le timer 27.

8/ L'appareil détecte la disparition du signal de recherche avant 5 secondes. Si la durée du signal est supérieure à 5 secondes, un R est imprimé dans l'une des colonnes et le numéro de constitution est imprimé dans une autre colonne du fichier.

La barrette d'affichage 6 affiche "réseau saturé" et l'opérateur passe au numéro suivant. La détection de perte du signal de recherche s'effectue par la détection d'un signal haut ou bas d'une période supérieure à 65 millisecondes ou inférieure à 35 millisecondes. La durée de 5 secondes est obtenue par initialisation d'une mémoire à cette valeur et par la décrémentation de celle-ci par le microproceseur 23. Quand cette mémoire a un contenu de 0, la durée de 5 secondes est atteinte.

La détection d'un signal haut ou bas, ainsi que le passage de l'un à l'autre sont effectués toutes les millisecondes. Une mémoire est incrémentée définissant la durée soit d'un signal haut, soit d'un signal bas. Le microprocesseur 23 effectue une lecture de cette mémoire. Si le contenu de cette mémoire est d'une part, supérieur à 65 ou d'autre part, inférieur à 35 entre deux changements d'état du signal, alors le microprocesseur 23 en déduit la perte du signal de recherche. Pendant toute la durée de ces tests, le relais 61 reste fermé.

9/ L'appareil annule le contrôle de fréquence nulle côté demandé. Cette annulation se fait simplement par le fait que le microprocesseur 23 ne vient plus lire les lignes PBo et PB1 du périphérique 33.

10/ L'appareil mesure ensuite la durée des créneaux du signal de 440 Hz. Si la durée du signal est supérieure à 700 millisecondes, l'appareil en déduit la sonnerie chez l'abonné et passe en phase 11 ci-après. Dans le cas où le signal a une durée inférieure à 700 millisecondes, une seconde mesure est effectuée. Si la durée du signal est supérieure à 700 millisecondes, l'appareil en déduit la sonnerie chez l'abonné et passe à la phase suivante. Dans le cas contraire, l'appareil en déduit l' occupation (signal de 440 Hz) avec des créneaux de 500 millisecondes $\pm$ 100 millisecondes et imprime un zéro dans l'une des colonnes et le numéro de constitution distribution est imprimé dans une autre colonne du fichier.

La barrette d'affichage 6 affiche "abonné occupé" et l'opérateur passe au numéro suivant. Si 3,6 secondes après le début de la phase 10, l'appareil n'a détecté aucun des deux signaux précédents, il en déduit un blanc. Un B et le numéro de constitution distribution sont imprimés sur le fichier. La barrette d'affichage affiche "blanc" et l'opérateur passe au numéro suivant.

La mesure des différents signaux précités s'effectue comme déjà indiqué dans le paragraphe 7 à la différence près que la mémoire est comparée avec des valeurs différentes correspondant aux différents temps des périodes de signaux suivant chaque cas.

11/ Si depuis le début du contrôle de fréquence nulle, une fréquence a été détectée, l'appareil imprime un F et le numéro de constitution distribution sur le fichier. La barrette d'affichage 6 affiche alors "présence fréquence". L'opérateur passe ensuite au numéro suivant.

Dans le cas contraire, l'opérateur passe à la phase 12 ci-après.

12/ L'appareil effectue un bouclage côté demandé sur le point distribution (cette action équivaut en fait au décrochage d'un combiné). Un signal codé (5 bits à 5 millisecondes/bits) est envoyé sur la ligne de service 16 côté demandeur.

A cet effet, le microprocesseur 23 ferme le relais 62 situé sur la carte de liaison 14, qui correspond au bouclage en distribution. S'il n'obtient pas la lecture du signal codé après deux essais, il commande la fermeture du relais 64 de cette carte de liaison 14 et va effectuer la lecture sur le décodeur 57 correspondant.

13/ L'appareil effectue une lecture de ce signal côté demandé sur les têtes de transport et de distribution. La reconnaissance du signal entraîne le passage à la phase 14 ci-après.

20

La non-reconnaissance du signal sur le point distribution entraîne l'envoi d'un second signal codé.

La lecture du signal test se fait de nouveau sur les points transport et distribution. Si ce second signal est reconnu sur le point distribution, le système tient compte du résultat obtenu sur le point transport et passe en phase 14 ci-après.

Dans le cas contraire, le système effectue le bouclage sur le point transport, envoie un troisième signal, effectue la lecture du point transport et passe en phase 14 ci-après.

14/ L'appareil affiche et imprime les messages en fonction des résultats du test.

Les messages à imprimer sont contenus dans la mémoire 24 (2 K EPROM) de la carte unité centrale 11. Les messages sont communiqués à l'imprimante 3 par l'intermédiaire du circuit 25 de la carte 11 sous forme de caractères codés en ASCII. La gestion des différents mots des messages, des différents modes d'impression est contenue dans le programme et un certain nombre de variables et de données concernant le test proprement dit et le résultat du test sont recherchées dans la mémoire vive 31 (2 K octets) pour compléter le contenu des messages qui se trouvent dans la mémoire 24. Quand l'imprimante reçoit les caractères ASCII, elle imprime un caractère et aussitôt elle envoie une réponse au microprocesseur 23 par l'intermédiaire du circuit 25 et celui-ci envoie le caractère suivant. Lorsque l'impression est terminée, le programme recommence au début et attend l'entrée d'un nouveau numérique. Dans le cas où le numéro n'a pas abouti parce qu'on a détecté l'occupation ou une fréquence sur les lignes, ce numérique sera à refaire.

Les phasesprécitées du déroulement des différents tests sont illustrées par le diagramme de la figure 7.

Bien entendu, l'invention n'est pas limitée aux exemples que l'on vient de décrire et on peut apporter à ceux-ci de nombreuses modifications sans sortir du cadre de l'invention.

REVENDICATIONS

1. Appareil pour contrôler automatiquement la correspondance entre le numérique des abonnés au téléphone et les différents repérages transport et distribution de la paire qui leur est attribuée, cet appareil étant destiné à être branché au réseau électrique et aux têtes de raccordement des lignes de transport et de distribution d'un sous-répartiteur, caractérisé en ce qu'il comprend :

- des moyens (4, 5) permettant d'introduire successivement dans l'appareil les numériques et les numéros de constitution des abonnés du fichier technique qui est à vérifier,

- des connecteurs (8, 9, 10) destinés à être raccordés aux têtes d'un sous-répartiteur,

- une unité de contrôle comprenant un microprocesseur (23) programmé pour stocker les données introduites dans l'appareil et pour commander l'émission d'un signal codé vers le câble transport et distribution des paires à tester, des moyens pour détecter ce signal, pour vérifier si la constitution désignée est correcte ou non sur les paires correspondantes des têtes de transport et distribution du sous-répartiteur et,

- des moyens (3) pour visualiser les résultats de ce test.

2. Appareil conforme à la revendication 1, caractérisé en ce que les moyens pour visualiser les résultats sont constitués par une imprimante (3) imprimant automatiquement les résultats du test sur le fichier technique des abonnés.

3. Appareil conforme à l'une des revendications 1 ou 2, caractérisé en ce que les moyens d'introduction de données dans l'appareil comprennent un clavier (4) à touches (5, 5b), lesdites touches comprenant des touches numérotées (5b) pour introduire le numérique et les numéros de constitution de l'abonné et des touches (5) pour sélectionner l'un des programmes suivants :

- un programme d'introduction des numériques et des numéros de constitution de l'abonné,

- un programme pour spécifier la correspondance des têtes du sous-répartiteur,

- un programme de test de continuité ou de définition des bornes,

- un programme d'affectation d'une tête en transport ou en distribution, et

- un programme pour revenir en position de début de cycle.

4. Appareil conforme à la revendication 3, caractérisé en ce qu'il comprend un boîtier (32) pour décoder les données introduites dans l'appareil par les touches (5, 5b) du clavier (4) et les stocker dans une mémoire tampon (31) et en ce que le microprocesseur (23) est programmé pour lire cette mémoire tampon (31) et stocker les données dans une mémoire de travail (26).

5. Appareil conforme à la revendication 4, caractérisé en ce qu'il comprend des moyens pour contrôler la présence d'une tension entre les paires de distribution et de transport programmées au moyen des touches (5, 5b) du clavier (4).

6. Appareil conforme à la revendication 5, caractérisé en ce que ces moyens sont constitués par le fait que le microprocesseur (23) est programmé pour communiquer à un circuit (34) le numéro de la paire à tester, ce dernier étant relié à des moyens de sélection (17, 18, 19) agencés pour relier ladite paire à un détecteur de tension (58) qui est en liaison avec un circuit (33), en ce que le microprocesseur (23) est programmé pour effectuer une lecture du circuit (33) et en déduire l'existence ou non d'une tension dans la paire testée, pour stocker ce résultat en mémoire et pour communiquer successivement au circuit (34) les numéros suivants des paires à tester.

7. Appareil conforme à l'une des revendications 4 à 6, caractérisé en ce qu'il comprend des moyens pour tester sur la ligne de service (16) côté demandeur, l'existence d'une fréquence correspondant à la tonalité pendant une durée prédéterminée.

8. Appareil conforme à la revendication 7, caractérisé en ce que ces moyens sont constitués par le fait que le microprocesseur (23) est programmé pour communiquer ladite durée prédéterminée à une mémoire dont le contenu est décrémenté en suivant la base de temps du timer (27) et pour commander la fermeture d'un relais permettant de relier la ligne de service à un détecteur de fréquence (57) qui est en liaison avec un circuit (33), en ce que le microprocesseur est programmé pour effectuer une lecture du circuit (33), en déduire l'existence ou non d'un signal ayant la fréquence déterminée avant l'expiration de la durée prédéterminée et commander l'impression par l'imprimante du résultat de ce test.

9. Appareil conforme à l'une des revendications 7 ou 8, caractérisé en ce qu'il comprend des moyens pour contrôler la détection d'une fréquence nulle sur les paires transport et distribution du côté demandé.

10. Appareil conforme à la revendication 9, caractérisé en ce que le microprocesseur (23) est programmé pour sélectionner les deux paires transport et distribution correspondant au numérique de l'abonné à tester, pour commander la fermeture d'un relais pour mettre en communication la paire à tester avec le détecteur de fréquence (57) relié au circuit (33), en ce que le microprocesseur (23) est programmé pour effectuer une lecture du circuit (33), en déduire l'existence d'une fréquence nulle ou non et interrompre l'opération en cas de détection d'une fréquence non nulle.

11. Appareil conforme à l'une des revendications 4 à 10, caractérisé en ce qu'il comprend des moyens pour stocker en mémoire les numériques de l'abonné et pour détecter sur la ligne de service (16) côté demandeur l'existence d'une fréquence déterminée et pour commander l'impression sur l'imprimante du résultat de ce test si la durée du signal correspondant à la fréquence précitée dépasse une valeur prédéterminée, indiquant que le réseau est saturé.

12. Appareil conforme à l'une des revendications 4 à 11, caractérisé en ce qu'il comprend des moyens pour détecter si l'abonné de la paire à tester est occupé.

13. Appareil conforme à la revendication 2, caractérisé en ce que l'unité de contrôle comprend une carte unité centrale (11) comprenant un microprocesseur (23) chargé de gérer l'ensemble de l'unité de contrôle en fonction des programmes sélectionnés, une mémoire EPROM (24) contenant le programme d'application, un circuit d'interface (25) comprenant 256 octets de mémoire vive (26) pour le stockage temporaire des informations, des moyens (27) pour mesurer la durée des signaux et trois ports parallèles (28, 29, 30) réalisant l'interface avec l'imprimante (3).

14. Appareil conforme à la revendication 13, caractérisé en ce que l'unité de contrôle comprend en outre, une carte clavier (22) équipée d'une mémoire vive (31) de 2 K octets et comprenant des moyens pour stocker les informations concernant les résultats des tests et un circuit (32) pour traiter les informations issues des moyens (4) d'introduction des données en vue de les convertir en valeurs ASCII et réaliser l'interfaçage avec le bus de données du système.

15. Appareil conforme à l'une des revendications 13 ou 14, caractérisé en ce qu'il comporte en outre une carte de commande (12), une carte de filtrage (15), une carte (14) de liaison avec le sous-répartiteur et des cartes sélection (17, 18, 19) reliées chacune aux connecteurs (8, 9, 10) destinés à être raccordés aux têtes du sous-répartiteur, la carte de commande (12) comprenant des moyens pour adresser les cartes de sélection (17, 18,19) et pour élaborer les signaux utilisés par les cartes de filtrage et de liaison avec le sous-répartiteur et pour prendre en compte les informations issues de la carte de filtrage (15).

16. Appareil conforme à la revendication 15, caractérisé en ce que la carte de commande (12) comprend deux périphériques parallèles (33, 34) permettant d'interfacer le bus du système avec les cartes (15, 14, 17, 18, 19) recevant les signaux extérieurs, l'un (33) de ces périphériques étant relié à la carte de filtrage (15) et l'autre (34) à une carte mère sélection (20) qui sert de support aux cartes de sélection (17, 18, 19).

17. Appareil conforme à l'une des revendications 14 ou 16, caractérisé en ce qu'il comprend une carte mère (13) qui sert de support à la carte unité centrale (11), à la carte de commande (12) et à une carte clavier (22) et à une carte (35) comportant une barrette alphanumérique (6) qui visualise les données qui sont entrées dans l'appareil.

18. Appareil conforme à l'une des revendications 15 à 17, caractérisé en ce que la carte de filtrage (15) comprend un générateur de fréquence (55) et des détecteurs de fréquence (57).

19. Appareil conforme à la revendication 18, caractérisé en ce que la carte de liaison (14) avec le sous-répartiteur comprend un relais (61) assurant la prise de la ligne et sa numérotation, un relais (63) assurant l'aiguillage du détecteur de fréquence (57) sur la paire de transport ou de distribution, et des relais (62, 64) permettant de simuler le décrochage du téléphone en transport ou en distribution.

FIG_1

FIG. 2

0136933

FIG_3

FIG_4

FIG_5

0136933

FIG. 6

0136933

FIG_7

INITIALISATION

APPUI SUR V ? — OUI

NON

ENTREE DES DONNEES (1)

APPUI SUR TC ? — OUI

NON

TEST DE CONTINUITE (2)

APPUI SUR DC ? — OUI

NON

DEMARRAGE DU CYCLE (3)

TONALITE ? — NON (4)

OUI

4 sec ecoulees ? — NON

OUI

DEBUT DETECTION FREQ. (5)

PAS DE TONALITE

NUMEROTATION (6)

DETECTION RECHERCHE (7)

FIN DETECTION FREQ.

RECHERCHE > 5 sec ? — OUI (8)

NON

RESEAU SATURE

ATTENTE 500ms

CONTROLE OCCUPATION (10)

SONNER — occup,blanc,son.? — occup.

ABONNE OCCUPE

blanc

BLANC

FREQ.DETECTEE ? — OUI (11)

NON

PRESENCE FREQUENCE

ENVOI DU SIGNAL TEST (12)

RESULTATS DU TEST (14)

OUI — APPUI SUR RET ? — NON

## DOCUMENTS CONSIDERES COMME PERTINENTS

| Catégorie | Citation du document avec indication en cas de besoin des parties pertinentes | Revendication concernee | CLASSEMENT DE LA DEMANDE (Int. Cl 4) |
|---|---|---|---|
| A | US-A-4 208 553 (KAPLAN) <br> * Colonne 2, ligne 55 - colonne 5, ligne 2 * | 1 | H 04 M 3/28 |
| | --- | | |
| A | US-A-3 973 090 (MILLER) <br> * Colonne 1, ligne 50 - colonne 2, ligne 10 * | . 1 | |
| | ----- | | |

| DOMAINES TECHNIQUES RECHERCHES (Int. Cl.4) |
|---|
| H 04 M |

Le présent rapport de recherche a été établi pour toutes les revendications

| Lieu de la recherche | Date d'achèvement de la recherche | Examinateur |
|---|---|---|
| LA HAYE | 13-11-1984 | VANDEVENNE M. J. |